# EUROPEAN PATENT APPLICATION

(11) **EP 2 141 704 A2**
(43) Date of publication of application: **06.01.2010**
(21) Application number: 09171934.4
(22) Date of filing: 12.11.2004
(51) Int. Cl.: G11B 27/10, G11B 27/32, G11B 27/34

(54) **Recording medium having a data structure for managing data and recording and reproducing method and apparatus**

(30) Priority: 11.02.2004 US 543328 P; 10.02.2004 US 542852 P; 10.02.2004 US 542850 P; 13.03.2004 KR 20040017126
(62) Divisional of application: 04800086.3
(71) Applicant: LG Electronics, Inc., Seoul 150-721 (KR)
(72) Inventor: Seo, Kang, Soo, 431-075, Gyeonggi-do (KR); Kim, Byung, Jin, 463-010, Gyeonggi-do (KR); Yoo, Jeo, Yong, 138-747, Seoul (KR)
(74) Representative: Vossius & Partner

(57) **Abstract**

In a data structure for managing main data and supplemental data, a playlist includes at least one playitem included in a mainpath and at least one subplayitem included in a subpath. The playitem including management information for managing reproduction of main data recorded on the recording medium, and the subplayitem includes management information for managing reproduction of supplemental data recorded on the recording medium. One of the at least one subplayitem identifies a plurality of clip information files for a same playing interval of the subplayitem. Each clip information file includes attributes of an associated clip of the supplemental data, and each of the plurality of clip information files includes an application type indicator indicating a type of application using the associated clip of the supplemental data. The playlist includes a type indicator that indicates a type of the subpath, and the type of the subpath is associated with the type of application.

## Description

### Technical Field

The present invention relates to high density recording media such as read-only blu-ray discs (BD-ROM).

### Background Art

Optical discs are widely used as an optical recording medium. Presently, of the optical discs, a new high density optical recording medium (HD-DVD), such as the Blu-ray Disc (hereafter called as "BD"), for recording and storing a large amount of high definition video and audio data is under development.

Currently, global standard technical specifications of the Blu-ray Disc (BD), a next generation HD-DVD technology, are being established as a next generation optical recording solution that can store amounts of data significantly surpassing present DVDs.

In relation to this, development of optical reproducing apparatuses for the Blu-ray Disc (BD) standards has also started. However, the Blu-ray Disc (BD) standards are not complete yet, and there has been difficulty in developing a complete optical reproducing apparatus.

Particularly, for effective reproduction of data from the Blu-ray Disc (BD), in addition to main AV data, various kinds of other data may be reproduced for the convenience of a user, such as supplementary or supplemental data (e.g., interactive graphics data, subtitle data, etc.) related to the main AV data. Accordingly, managing information should be provided for managing reproduction of the main data and the supplemental data. However, in the present Blu-ray Disc (BD) standards, because consolidated standards for managing the various data, particularly the supplemental data are not complete yet, there are many restrictions on the development of a Blu-ray Disc (BD) optical reproducing apparatus.

### Disclosure of Invention

A recording medium according to the present invention includes a data structure for managing reproduction of various data streams.

In one embodiment, the recording medium stores a playlist that includes at least one playitem and at least one subpath. The playitem includes management information for managing reproduction of main data recorded on the recording medium, and the subpath includes at least one subplayitem. The subplayitem includes management information for managing reproduction of supplemental data recorded on the recording medium, and the subplayitem includes a synchronization data field for providing synchronizing information to synchronize reproduction of the supplemental data with reproduction of the main data. Also, the subpath includes a type indicator that indicates the type of the supplemental data managed by the subpath and signifies whether the synchronizing information is valid.

For example, when the type indicator indicates that the supplemental data type is audio for a slide show or an interactive graphic presentation menu, the type indicator signifies that the synchronizing information is invalid and that the subpath is not synchronized with the playitem. As another example, when the type indicator indicates that the supplemental data type is a text subtitle presentation, the type indicator signifies that the synchronizing information is valid and that the subpath is synchronized with the playitem.

In another embodiment, the recording medium stores a playlist that includes at least one playitem and at least one subpath. The playitem includes management information for managing reproduction of main data recorded on the recording medium, and the subpath includes at least one subplayitem. The subplayitem includes management information for managing reproduction of supplemental data recorded on the recording medium, and the subplayitem identifies at least one clip information file.

Each identified clip information file indicates an associated clip of the supplemental data to reproduce from the recording medium. Each identified clip information file provides an application type indicator indicating an application type of the supplemental data in the associated clip.

Furthermore, the subpath includes a type indicator that indicates the type of the supplemental data managed by the subpath and signifies the application type.

For example, when the type indicator indicates the supplemental data type is a text subtitle, the type indicator signifies that the application type indicator provided by the identified clip information file indicates the application type of the supplemental data in the associated clips is for text subtitle.

The present invention further provides apparatuses and methods for recording and reproducing the data structure according to the present invention.

### Brief Description of Drawings

The accompanying drawings, which are included to provide a further understanding of the invention and are incorporated in and constitute a part of this application, illustrate embodiment(s) of the invention and together with the description serve to explain the principle of the invention.

In the drawings;
FIG. 1 illustrates a file structure for managing various data on a disc in accordance with an example embodiment of the present invention;
FIG. 2 illustrates a format of a disc on which the file structure of FTG.1 is recorded in accordance with an exampled embodiment of the present invention;
FIG. 3 illustrates a data structure and method for recording reproduction management information of main AV data and supplemental data streams;
FIGS. 4A ∼ 4C are diagrams of a main path and possible sub-path structures for reproduction management of clips having different attributes in accordance with example embodiments of the present invention;
FIGS. 5A and 5B illustrate diagrams showing examples in which a main AV stream and supplemental data, particularly, a text subtitle are provided at the same time;
Fig. 6 illustrates syntax data structures of a subpath and a subplayitem in accordance with example embodiments of the present invention;
FIG. 7 illustrates a diagram showing a ClipInfo() syntax for a supplemental data clip information in accordance with an example embodiment of the present invention;
FIG. 8 illustrates a diagram showing a SequenceInfo() data structure syntax for supplemental data clip information in accordance with an example embodiment of the present invention;
FIG. 9 illustrates a diagram showing an STC-sequence of a text sub-title clip in accordance with an example embodiment of the present invention.;
FIG. 10 illustrates a diagram showing a ProgramInfo() data structure syntax for supplemental data clip information in accordance with an example embodiment of the present invention; and
FIG. 11 illustrates a block diagram of an optical recording and reproduction apparatus in accordance with an example embodiment of the present invention.

### Best Mode for Carrying Out the Invention

Reference will now be made in detail to the embodiments of the present invention, examples of which are illustrated in the accompanying drawings. Though words used in the present invention are selected from widely used general words, there are words the applicant has selected at his discretion and the detailed meanings of these words are described in relevant parts of the description of the present invention. As such, the present invention is to be understood by meanings of the words provided in the disclosure.

In relation to above, main data in the present invention means main data or information on the recording medium (e.g., an optical disc) such as a title of video and audio data an author provides to a user, in general, recorded in the MPEG2 format, and often referred to as a main AV stream.

Supplementary or supplemental data means all data related to the main data provided to a user for convenience of reproduction, including, for example, an auxiliary audio stream as a background music; interactive graphic stream, such as PopUp menu, a click sound interactive with the user; and subtitle information such as caption information and words of a song.

Therefore, depending on the nature of the supplementary data, the supplemental data is recorded multiplexed with a main AV stream in the MPEG2 format, or is recorded as a stream file in the MPEG2 or other format independent from the main AV stream.

Caption information is information generally displayed at one side of a screen when the user selects a subtitle of a language the optical disc supports and intends to watch a video (the main AV data) with a caption of that language.

The PopUp menu, introduced for providing different menus depending on the nature of data in an associated reproduction unit, is menu information provided in a small window of a display screen without changing reproduction of a picture under reproduction. The PopUp menu may be displayed overlapping the picture under reproduction. Because of this, the menu information is referred to as a "PopUp" menu.

The click sound is a brief sound provided upon selection of a menu button, or a shift in selection, and calls a user's attention to the fact that a selection has been made. Depending on the use of the click sound, the click sound is sometime referred to as a "menu sound".

In the present invention, the "subtitle" as supplemental data may be caption information, presentation graphic information, etc. such as the text of a song. Therefore, the subtitle may be written in various formats such as MPEG2 transport (TS) packets, bit-map form of binary format, or text data (e.g., character data). A subtitle recorded in the form of text data may be referred to as a "text subtitle".

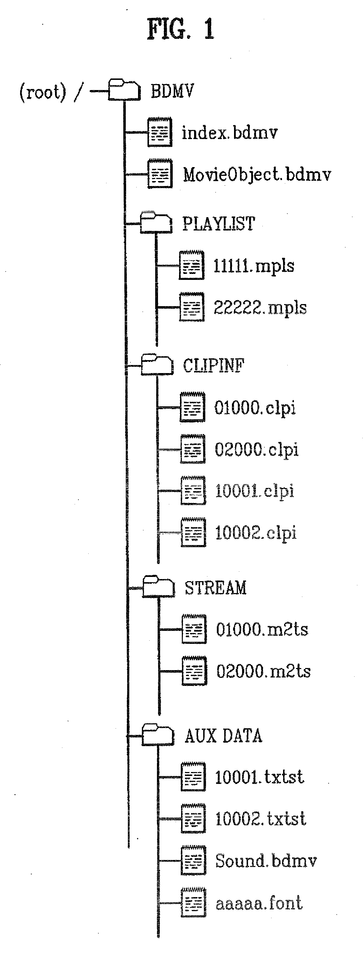

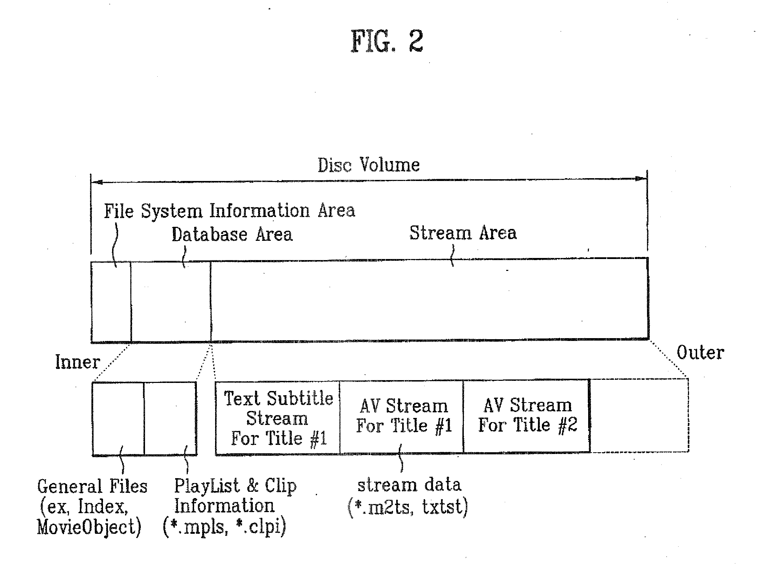

A format for recording main data and supplementary data on the recording medium such as a BD disc, and a file structure for managing the data will be described in detail with reference to FIGS. 1 and 2.

FIG. 1 illustrates a file structure for managing various data on a disc in accordance with an example embodiment of the present invention. As shown, the file structure includes at least one BD directory BDMV, under a root directory, having an index file index.bdmv and an object file MovieObject.bdmv as general files (upper files) for securing user interactivity. For example, the index file index.bdmv is constructed centered on an index table having menu information and title information the user can select.

The BD directory also includes a playlist directory PLAYLIST, a clipinfo directory CLIPINF, a stream directory STREAM, and an auxiliary directory AUX DATA.

The stream directory STREAM has files on a main video and audio stream (called a main AV stream) recorded in MPEG2 transport packets. Because the main AV stream is record in the MPEG2 format, the file name extension of the main AV stream files (e.g., 01000.m2ts and 02000.m2ts) will be "*.m2ts".

Meanwhile, the streams of supplementary or supplemental data, provided for convenience of the user during reproduction of the main data may be provided in a separate directory - the AUX DATA directory - when the supplemental data stream files are independent of the main data stream files. The AUX DATA directory has supplemental and auxiliary data streams such as text subtitle (10001.txtst, 10002.txtst), Font (aaaaa.font, 20001.font), popup PopUp (not shown), click sound (Sound.bdmv), etc. The supplemental data such as interactive graphics (e.g., a PopUp menu) and a subtitle (e.g., a text subtitle) are related to the main AV stream, and may be supported by other supplemental data such a sound file and font file. For example, the sound file may include the click sound reproduced in association with a user's selection from the PopUp menu, and the font file may include a font used to reproduce the text subtitle. Some of the supplementary data streams, such as audio information for a browsable slide show, are multiplexed with the main data stream, and therefore these supplementary data streams are included in the stream directory STREAM. The supplemental data streams in the AUX DATA directory are not multiplexed with the main data stream.

The clipinfo directory CLIPINF has clipinfo files (e.g., 01000.clpi, 02000.clpi, and 10001.dpi, and 10002.dpi) having a one-to-one correspondence with stream files and some of the AUX DATA files *.m2ts, and *.txt. Particularly, the clipinfo file *.clpi has attribute information and timing information of an associated file. The timing information includes information on mapping a presentation time stamp (PTS) of data in the associated file to a source packet number of a source packet in the file. Typically this map is referred to as an entry point map (EP Map). In the BD standard, the AV stream *.m2ts, *.txt files, or etc. and the associated clipinfo file *.clpi (e.g., 10002.cpli and 10002.txtst) are called a "clip", collectively.

The playlist directory PLAYLIST includes a playlist file (*.mpls), and at least one playitem for designating a playing interval of a particular clip. Therefore, the playitem has information on a play starting time In-Time and play end time Out-Time of a particular clip desired to play, i.e., designated by a clip name Clip_Information_File in the playitem. The playlist file *.mpls provides basic play file information for playing a desired clip by providing at least one playitem. Moreover, the playlist file *.mpls may be provided with a subplayitem SubPlayItem for reproduction management of the supplementary data. As discussed in detail below, the subplayitem provides some of the same management information as a playitem, but for reproduction of supplemental data. Also, when a subplayitem SubPlayItem is provided for reproduction of a text subtitle, the text subtitle data may be reproduced synchronized with an associated playitem PlayItem (as discussed in greater detail below). As another example, when a subplayitem SubPlayItem is provided for reproduction of a browsable slide show, the slide show data may be played non-synchronized with an associated playitem PlayItem.

As shown in FIG. 2, the disc volume of a BD-ROM is organized into a File System Information Area, a Database Area, and a Stream Area. The File System Information Area stores system information for managing the disc. The Database Area includes a general files area and a playlist and clip information area. The general files area stores general files such as the index.bdmv file and the MovieObject.bdmv file. The playlist and clip information area stores the PLAYLIST directory and the CLIPINF directory. The main data and the supplemental data are recorded in the Stream Area. According to this, a reproducing apparatus determines the main data and the supplementary data desired to reproduce, by using file information in the Database Area and/or stream management information in the Stream Area.

Next, data structures and information for managing the reproduction supplementary data will be described in detail. Also methods for recording the managing information as disc management information, and methods for reproducing the supplemental data using the recorded management information will be described in detail.

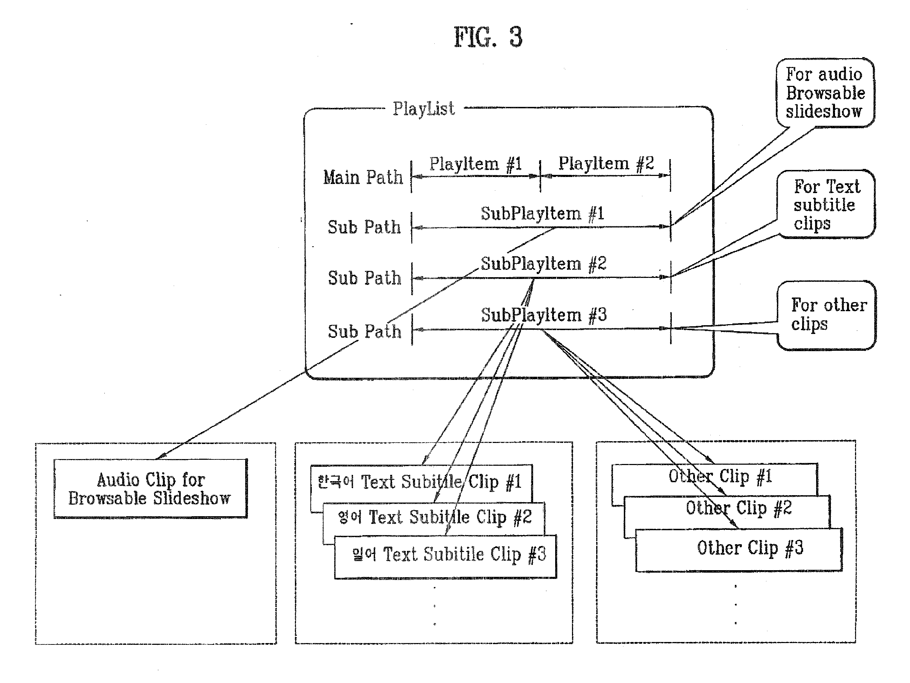

FIG. 3 illustrates a data structure and method for recording reproduction management information of main AV data and supplemental data streams. As shown, a particular title for reproduction may be managed by a playlist file PlayList, and the main AV data is recorded in a main clip Main Clip (not shown). More specifically, in this instance, the one main clip Main Clip may be managed by a plurality of playitems PlayItem #1 and PlayItem #2. Also, different main clips Main Clip may be managed by a plurality of playitems within one playlist PlayList.

The supplemental data that supplements the main AV data are recorded in separate clips and managed by subplayitems, for example, SubPlayItems#1, #2 and #3. As shown, a SubPath exists for each supplemental data type and the subplayitems are organized by SubPath.

That is, the supplemental data is sorted according to clip types, and managed by a plurality of subplayitems. For example, an audio clip for a browsable slide show may be a clip managed by a first subplayitem SubPlayItem #1 in one SubPath, and a plurality of text subtitle clips Text Subtitle Clips #1, #2 and #3 for supporting caption information of Korean, English, Japanese, respectively, may be clips managed by a subplayitem SubPlayItem 2 in another SubPath. Of the supplementary data, a plurality of other clips (e.g., PopUp, etc.) excluding the audio clip and the text subtitle clips may be managed by a subplayitem SubPlayItem 3 in yet another SubPath.

Thus, an example file structure of the present invention has a structure in which the clips are managed by a subplayitem for each clip type (e.g., each supplemental data or SubPath type).

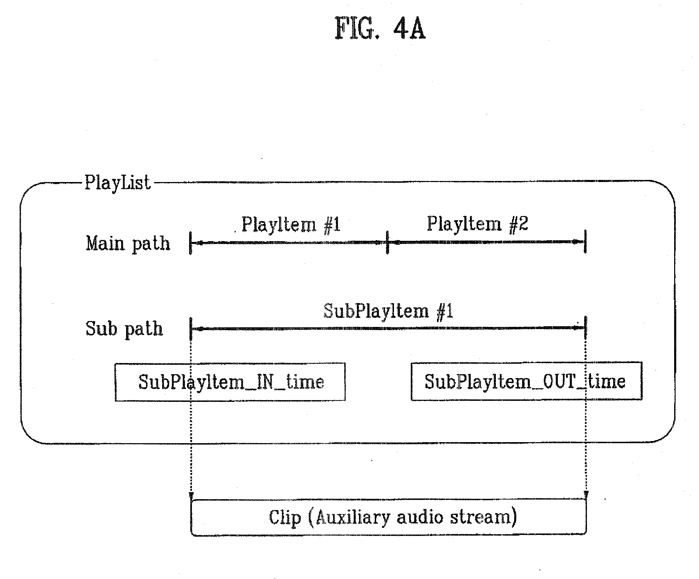

The playitem PlayItem in the PlayList has reproduction management information for reproducing the main data, and the subplayitems SubPlayItem have reproduction management information for reproducing the supplemental data. Particularly, as described before, as part of the reproduction managing information, the playitem and subplayitems provide reproduction starting time In-time and a reproduction end time Out-Time for each associated clip. This aspect of the management information will be described in more detail with reference to FIGS. 4A ∼ 4C.

FIGS. 4A ∼ 4C are diagrams of a main path and possible sub-path structures for reproduction management of clips having different attributes in accordance with example embodiments of the present invention. These figures provide a graphical representation of the data structures according to the present invention. Later, the syntax for these data structures will be described.

FIG. 4A illustrates a diagram for the example of an audio clip for browsable slide show, i.e., a supplemental audio stream. As shown, for a plurality of playitems PlayItems #1 and #2 that form a main path, a subplayitem SubPlayItem #1 forms an audio presentation path of a browsable slideshow as a SubPath. Namely, the subplayitem SubPlayItem #1 may be used for providing background music that is a supplementary audio stream when displaying a browsable slide show.

In this instance, the subplayitem SubPlayItem #1 manages reproduction of the supplementary audio stream by providing information on the reproduction starting time SubPlayItem_IN_time and reproduction end time SubPlayItem_OUT_time of a clip having an auxiliary audio stream. Furthermore, the reproduction is managed such that reproduction of the auxiliary audio stream clip is not synchronized with the playitems PlayItem that form the main path. The subplayitem SubPlayItem for this subpath type can not have a plurality of supplementary audio clips, and instead may only have one supplementary audio clip. The subplayitem SubPlayItem #1 also manages the clip by providing the name of a clip information file Clip_information_file_name for the clip.

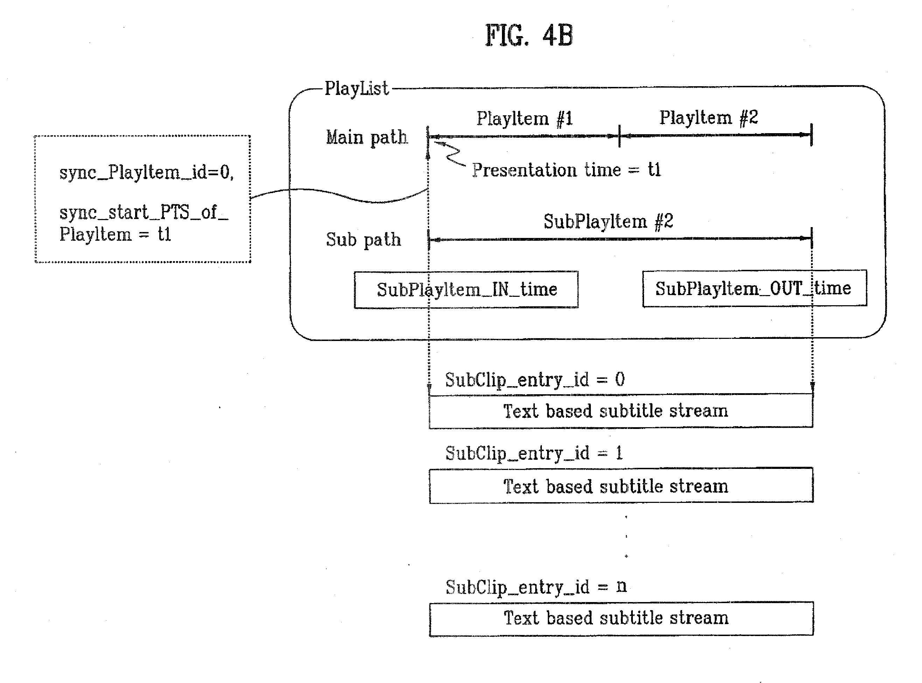

FIG. 4B illustrates a diagram for the example of a plurality of text subtitle clips, i.e., text subtitle stream in accordance with an embodiment of the present invention. As shown, a subtitle SubPath of a plurality of text subtitle streams having different language information (e.g., Korean, English, Japanese, etc.) may each have a subclip entry identifier SubClip_entry_id, and may be managed by one subplayitem SubPlayItem #2. The subplayitem SubPlayItem #2 manages reproduction of the text subtitle stream by providing the reproduction starting time SubPlayItem_IN_time and the reproduction end time SubPlayItem_OUT_time. Accordingly, the single interval (In_time to Out_Time) applies to each of the plurality of clips managed by the subplayitem SubPlayItem #2.

As described before, the text subtitle stream is reproduced synchronized with the main AV data, because the text subtitle stream is information usually displayed at one side of the display screen while a video stream (e.g., the main AV data) is under reproduction.

A subplayitem SubPlayItem is synchronized with a playitem PlayItem by using information, such as PTS (Presentation Time Stamp). More specifically, the subplayitem SubPlayItem is synchronized with the playitem Playltem by using the field information of "sync_PlayItem_id" and "sync_start_PTS_of PlayItem" in the subplayitem SubPlayItem as discussed below.

For an example, as shown in Fig. 4B, if the subplayitem SubPlayItem #2 is to be synchronized at time t1 with the first playtime PlayItem #1 having a playitem id of "0", then the subplayitem SubPlayItem #2 includes a sync_Playitem_id field set to the playitem id (i.e., "0") of the first playitem #1 and a sync_start_PTS_of_PlayItem set to time t1.

As will be discussed in greater detail below, a subplayitem SubPlayItem further provides the names of the clip information files associated with the text subtitle stream clips. This is accomplished by indexing the clip_information_file_name field by the SubClip_entry_id for each text subtitle stream clip.

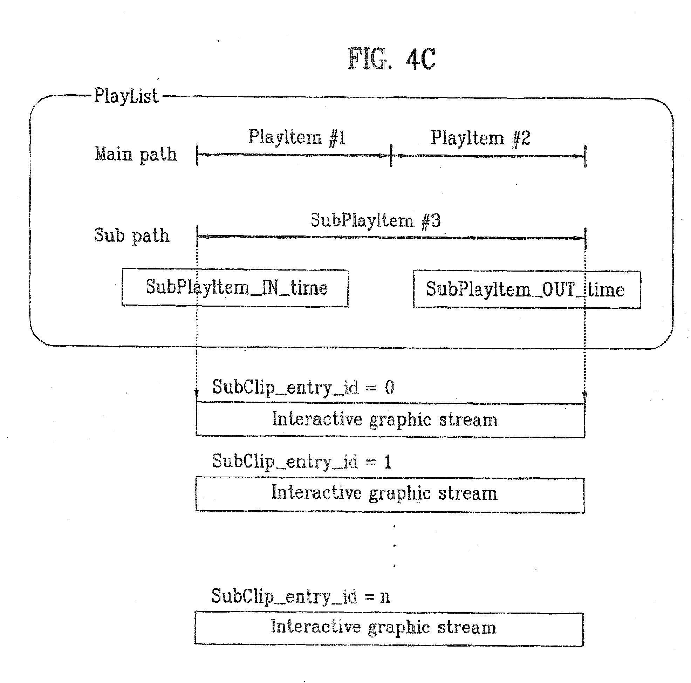

FIG. 4C illustrates a diagram for the example of an interactive graphic stream in accordance with an embodiment of the present invention. As shown, an interactive graphics SubPath of various interactive graphic streams (e.g., PopUp menus, etc.) interactive with the user (represented as other clip in FIG. 3) may be identified with subentry identifiers SubClip_entry_id and managed by one subplayitem SubPlayItem #3.

The interactive graphic streams managed by the subplayitem SubPlayItem #3 are reproduced non-synchronized with the playitems PlayItems #1 and #2 which form the main path. In this regard, this example is like the example of Fig. 4A. The subplayitem SubPlayItcm #3 manages reproduction of the interactive graphic streams by providing a single reproduction starting time SubPlayItem_IN_time, and a single reproduction end time SubPlayItem_OUT_time, and by providing the names of the clip information files being managed. In this regard, this example is like the example of Fig. 4B.

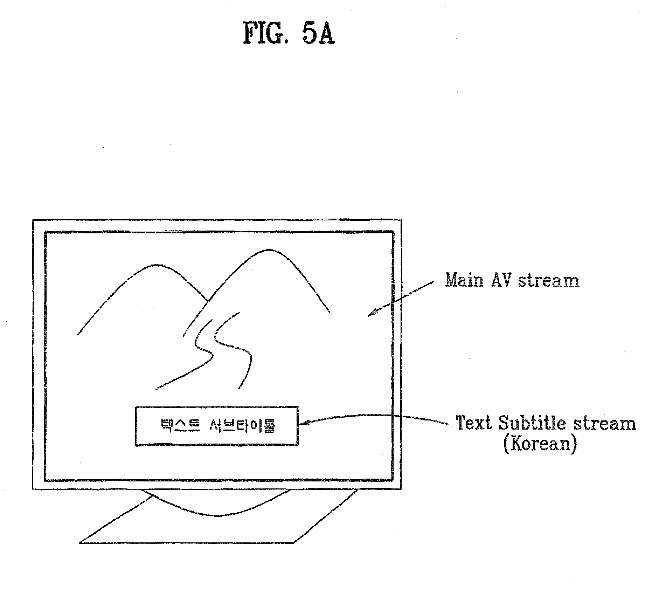

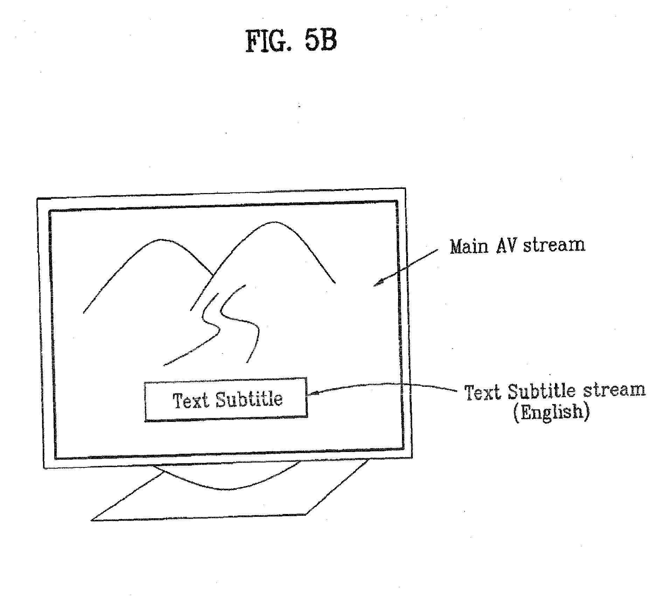

FIGS. 5A and 5B illustrate diagrams showing examples in which a main AV stream and supplemental data, particularly, a text subtitle are provided at the same time. FIG. 5A illustrates an example of a case when a text subtitle is in Korean as the caption information, and FIG. 5B illustrates an example of a case when a text subtitle is in English as the caption information. The text subtitles of Korean and English exist as independent clips, and are displayed, based on user selection, at one side of the display screen, separate from and overlapping with the main AV stream.

Next, the syntax of the data structures according to embodiments of the present invention will be described.

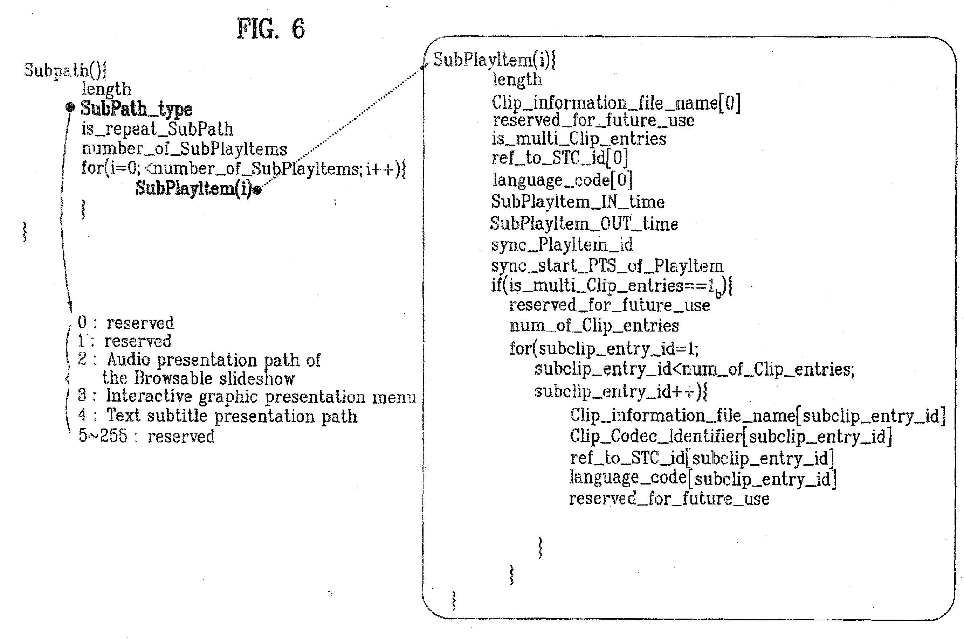

FIG. 6 illustrates syntax data structures of a subpath and a subplayitem in accordance with example embodiments of the present invention. As shown, the syntax of a "SubPath()" that designates a path of the supplemental data related to the main AV data included in one playlist PlayList has a length field, a "SubPath_type" field, an "is_repeat_SubPath" field, a "number_of_SubPlayItems" field, and a "SubPlayItem(i)" field.

The length field indicates the length of the SubPath data structure. The "SubPath_type" field designates a subpath type. Here, types 0 and 1 are reserved, a type of 2 indicates an audio path for a browsable slide show, a type of 3 indicates an interactive graphic presentation menu path, a type of 4 indicates a text subtitle presentation path, and types 5-255 are also reserved. An optical recording and reproduction apparatus may determine which subplayitem manages which type of clips by using the "SubPath_type" field. As described before, only the text subtitle SubPath_type=4 is reproduced synchronized with the main AV data. Accordingly, the SubPath type field indicates when the sync_PlayItem_id and sync_start_PTS_of_PlayItem fields in the subplayitems of the SubPath are valid or not.

The "number_of_SubPlayItems" field indicates the number of subplayitem entries SubPlayItem() managed by the SubPath.

As further shown in Fig. 6, the syntax of the subplayitem "SubPlayItem(i)" includes a length field indicating the length of the subplayitem, a "Clip_Information_file_name" field identifying a first or only clip information file of a clip managed by the subplayitem, a "SubPlayItem_IN_time" field and "SubPlayItem_OUT_time" for designating a stream file starting time and end time as described above, a "Clip_codec_identifier" field having a value of "m2ts" according to ISO 646, a "ref_to_STC_id[0] field for indicating an stc_id value for an STC sequence of the clip, and a "sync_PlayItem_id" field and a "sync_start_PTS_of_PlayItem" field for synchronizing the subplayitem with a playitem, if valid, as described above.

The subplayitem syntax also includes one bit information field called "is_multi_Clip_entries" recorded thereon as information for identifying whether a plurality of clips of supplementary data are managed by the subplayitem. For example, when "is_multi_Clip_entries" = 1b, the subplayitem manages a plurality of clips, and when "is_multi_Clip_entries" = 0b, the subplayitem manages a single clip.

If the subplayitem manages a plurality of clips (i.e., "is_multi_Clip_entries" = 1b) then the syntax of the subplayitem further includes a "num_of_Clip_entries" field indicating the number of clips managed by the subplayitem. When a plurality of clips are managed, the clips are referred to as subclips in the subplayitem syntax. For the second clip (i.e., subclip_entry_id = 1) through the last subclip, the syntax of the subplayitem provides a "Clip_Information_file_name[subclip_entry_id]" field, a "Clip_Codec_Identifier[subclip_entry_id]" field, and a "ref_to_STC_id[subclip_entry_id]" field. This information for the first clip having been provided in the first portion of the subplayitem syntax where the index (e.g., subclip_entry_id) was "0".

Furthermore, if the Subpath_type is four (i.e., the subplayitem manages a text subtitle), then a "language_code" field is included in the subplayitem syntax for each clip managed by the subplayitem. Therefore, language information of a subclip with a subclip entry identifier = 0 is recorded by a "language_code[0]" field, and language information on the remaining plurality of text subtitles in the subplayitem are recorded by "language_code[subclip_entry_id]" as shown in Fig. 6. In this embodiment, a number of the text subtitle managed by the subplayitem may be 255 as a maximum. The language code of a subclip indicates the language of the text subtitle represented by that subclip.

According to the above data structures and methods, various language clips of a text subtitle are represented, and it is apparent that the "language_code" field may be used in providing language selection information to a user for selecting and reproducing a text subtitle.

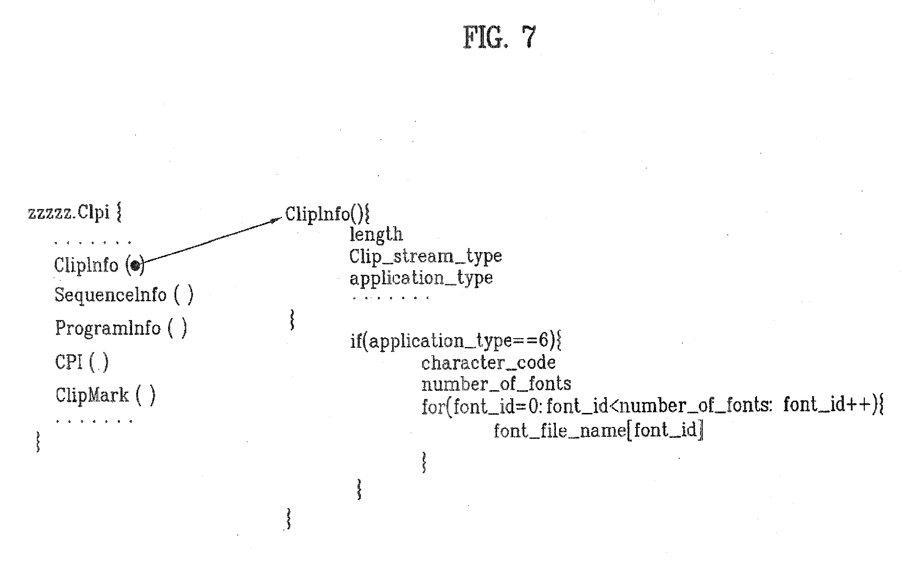

FIGS. 7 ∼ 8 illustrate data structures and methods for including information on supplementary data clips managed by subplayitems in accordance with example embodiments of the present invention.

FIG. 7 illustrates a diagram showing a ClipInfo() syntax for a supplemental data clip information in accordance with an example embodiment of the present invention. As shown, the clip info file zzzzz.Clpi having application information and time information on respective stream files *.m2ts, *.txst, etc. have five data structure objects: ClipInfo(), SequenceInfo(), ProgramInfo(), CPI(), and ClipMark().

The "ClipInfo()" data structure includes, among other things, a length field and an "application_type" field. The length field indication a length of the "ClipInfo()" data structure. An "application_type" field of '1' indicates a transport stream for a movie application Movie application, an "application_type" field of '2' indicates a transport stream for a time based slide show, an "application_type" field of '3' indicates a transport stream for a browsable slide show main path, an "application_type" field of '4' indicates a transport stream for an audio presentation of a browsable slide show subpath, an "application_type" field of '5' indicates a transport stream for an interactive graphic stream subpath, and an "application_type" field of '6' indicates a transport stream for a text subtitle stream subpath. That is, according to the "application_type", applications of respective streams are defined. Stated another way, for supplemental data, the SubPath type and

Application type fields are related such that the SubPath type indicates the application type and visa versa.

When the "application_type" is 6 (i.e., a case of the text subtitle stream), the ClipInfo() data structure includes a "character_code" field for defining a character code value, a "number_of_fonts" field for defining a number of fonts, and a "font_file_name[font_id]" field for defining a file name of each for the number of fonts.

Table 1 below shows character code values that may be used in the "character_code" field.

**Table 1**

| Value | Character code | Encoding |
|---|---|---|
| 0x00 | Reserved | |
| 0x01 | Unicode V1.1 (ISO 10646-1) | UTF8 |
| 0x02 | Unicode V1.1 (ISO 10646-1) | UTF16 big endian |
| 0x03 | GBK18030-2000 (Chinese) | N.A |
| 0x04 | GB2312 (Chinese) | N.A |
| 0x05 | BIG5 (Chinese) | N.A |
| 0x06 | Shift JIS (Japanese) | N.A |
| 0x07 | KSC 5601-1987 including KSC 5653 for Roman character (Korean) | N.A |
| others | Reserved | |

A character code value may be designated and used according to values in table 1, and particularly, the characters may be recorded in Big Endian form in the text subtitle stream.

During reproduction, a font file designated by the "font_file_name[font_id]" field may be preloaded on a buffer before reproduction of the playlist.

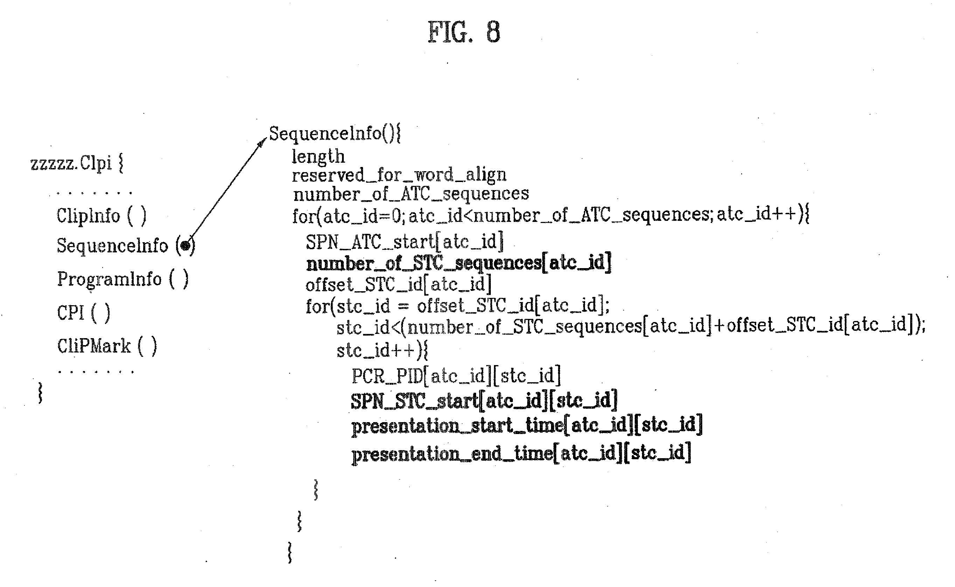

FIG. 8 illustrates a diagram showing a SequenceInfo() data structure syntax for supplemental data clip information in accordance with an example embodiment of the present invention. As shown, of the five data structure objects of the clip info file zzzzz.Clpi, the SequenceInfo() data structure has a length field indicating a length of the SequenceInfo and a "number_of_ATC_sequences" field indicating a number of ATC (Arrival Time Clock)-sequences. "SPN_ATC_start[atc_id]" field information, "number_of_STC_sequence[atc_id]" field information, and "offset_STC_id" field information are provided for each ATC sequence by incrementing the ATC id index by one starting from "0" (i.e., ATC_id=0) until the number of the ATC-sequences is reached.

The "SPN_ATC_start[atc_id]" field provides a Source Packet Number (SPN) of a starting position of the ATC-sequence designated by atc_id of the AV stream file, the "offset_STC_id" field provides an offset stc_id value of a first STC-sequence, and the "number_of_STC_sequence[atc_id]" indicates a number of the STC (System Time Clock)-sequences in the ATC-sequence designated by atc_id. In the case of a text subtitle stream, the number of the STC-sequences is set to '1'.

Moreover, by incrementing an STC_id from the offset value given in the "offset_STC_id[atc_id]" field to a number obtained by adding the offset value to the number in the "number_of_STC_sequence[atc_id]" field, the following fields are provided "PCR_PID[atc_id][stc_id]" field, "SPN_STC_start [atc_id][stc_id]" field, "presentation_start_time [atc_id][stc_id]" field, and "presentation_end_time [atc-id][stc_id]" field.

The "PCR_PID [atc_id][stc_id]" field indicates a value of the PID of transport packets that contain PCR fields valid for the STC-sequence designated by the stc_id in the ATC-sequence designated by the atc_id. The "SPN_STC_start [atc_id][stc_id]" field indicates the source packet number SPN at a starting position of the STC-sequence designated by the stc_id in the ATC-sequence designated by the atc_id. In the case of a text subtitle stream, the field is set to '0',

The "presentation_start_time [atc_id][stc_id]" field, and "presentation_end_time [atc_ad][stc_id]" field indicate a start time and end time, respectively, of the STC_sequence designated by the stc_id of the ATC-sequence designated by the atc_id in the AV stream. In the case of a text subtitle stream, the starting time is set to '0', and the end time is the same as an end time of a last presentation.

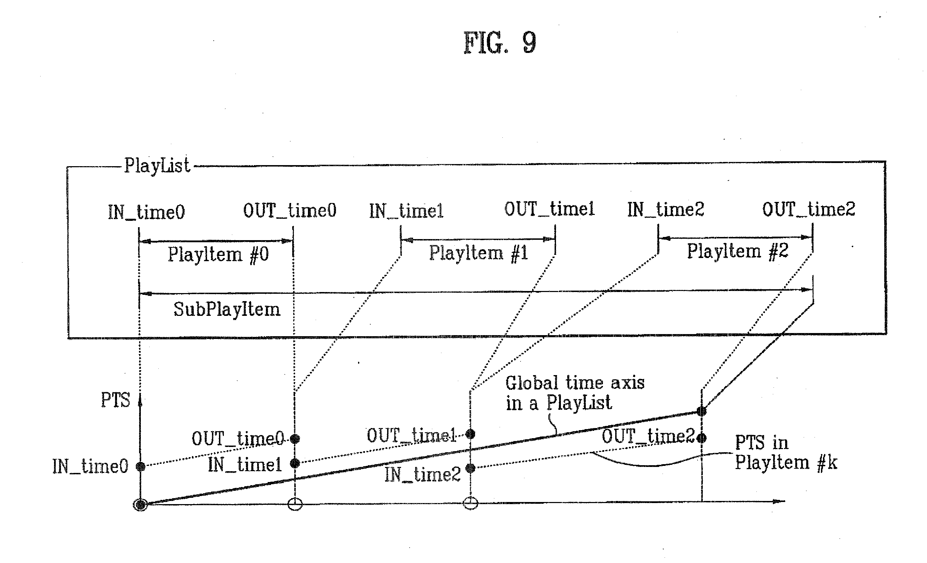

FIG. 9 illustrates a diagram showing an STC-sequence of a text sub-title clip in accordance with an example embodiment of the present invention. As shown, in an HDMV movie represented with a plurality of playitem Playltem, the text subtitles that one subplayitem SubPlayItem manages has one STC-sequence, and the STC-sequence is expressed using the same global time axis as the playlist PlayList.

This is because expressing the STC-sequence using the same global time axis as the playlist PlayList by using one STC-sequence is natural for successive provisioning of text subtitle information regardless of a number of the playitems PlayItems.

Moreover, as described before, the starting time of the STC-sequence is set to '0', and the end time is the same as an end time of the last presentation.

For decoding the text subtitle having one STC-sequence, the decoder obtains the information on STC discontinue points (see arcs in FIG. 9) of main AV clips of the playlist PlayList.

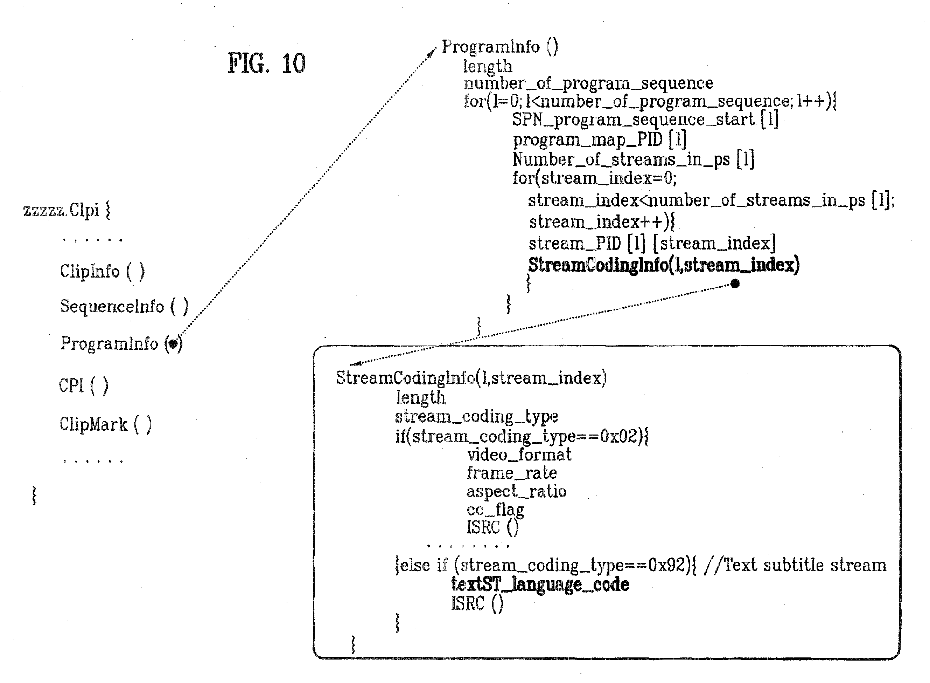

FIG. 10 illustrates a diagram showing a ProgramInfo() data structure syntax for supplemental data clip information in accordance with an example embodiment of the present invention. As shown, of the five data structure objects of the clip info file zzzzz.Clpi, the ProgramInfo() data structure has a length field, and a "number_of _program_sequence" field. The length field indicates the length of the Programlnfo data structure, and the "number_of_program_sequence" field indicates the number of program sequences managed by the ProgramInfo data structure. For each program sequence, indexed by 1, the data structure includes, an "SPN_program_sequence_start[1]" field, a "program_map_PID[1]" field, and a "number_of_streams_in_ps [1]" field. The "SPN_program_sequence_start[1]" field indicates the source packet (SPN) of the start of the 1th program sequence. The "program_map_PID[1]" field indicates the PID value of the transport packets that contain the program_map_section of the 1th program sequence. The "Number_of_Streams_in_ps[1]" field indicates the number of elementary streams in the 1th program sequence. For each stream indexed by a stream_index, the data structure further includes a "stream_PID [1]" field, a "StreamCodingInfo [1][stream_index]" field, and the like. The Stream_PID[1][stream_index]" field indicates the PID value of the transport packets for the elementary stream designated by the stream index stream_index for the program sequence designated by the sequence index 1. The "StreamCodingInfo (i, stream_index)" field has coding information on an elementary stream of the main AV stream and the supplementary data stream.

The "StreamCodingInfo (1, stream_index)" field, having coding information on the elementary stream includes a "length" field for indicating a length of the "StreamCodingInfo (1, stream_index)" field, and a "stream_coding_type" field for indicating a coding type of the elementary stream. This latter field has coding information on various forms of streams depending on the coding type of the elementary stream.

For example, the stream_coding_type of 0x02 indicates coding information of an MPEG2 video stream, the stream_coding_type of 0x80 indicates coding information of HDTV LPCM audio, the stream_coding_type of 0x81 indicates coding information of an Dolby AC-3 audio, the stream_coding_type of 0x82 indicates coding information of a dts audio, the stream_coding_type of 0x90 indicates coding information of a presentation graphic stream, and the stream_coding_type of 0x92 indicates coding information of a text subtitle stream (for convenience of description, FIG. 10 illustrates cases of the stream_coding_type of 0x02, and 0x92).

In the case of stream_coding_type=0x02, video_format, frame_rate, aspect_ratio, a cc_flag and an ISRC() fields are provided. The first three fields are self-explanatory, the cc_flag indicates whether Line 21 information of a 525/60 TV system is included in the stream, and the ISRC field indicates the applicable International Standard Recording Code.

In the case of the stream_coding_type of 0x92 (i.e., in the case of the text subtitle stream), language information on the text subtitle clip may be included by using the "textST_language_code" field.

The entire set or a subset of the above-described data structures may be used together or independently. Also, it is apparent that a plurality kinds of clip information may be selected by a subplayitem using any of the methods described above.

The five data structure objects of the clip info files in FIGs. 8 and 10 for zzzzz.clpi, also include a CPI data structure indicating a relation between time information and address information of the AV stream and a ClipMark() data structure not presently defined. A detailed description of these two data structures will be omitted because there is no substantial relation with the present invention.

In summary, and as discussed above, the supplemental data existing as independent clips are represented with clip types, and managed by separate subplayitems.

For management of the independent clips, applications of the subplayitems are represented with the SubPath_type information, and the syntax of the subplayitem is constructed according to the embodiment of the present invention. For including information required for the supplemental data clips managed by the subplayitem in respective clip information data structure, the syntax of the clip info file zzzzz.Clpi is constructed according to the embodiments of the present invention. The features of the present invention are not limited to above.

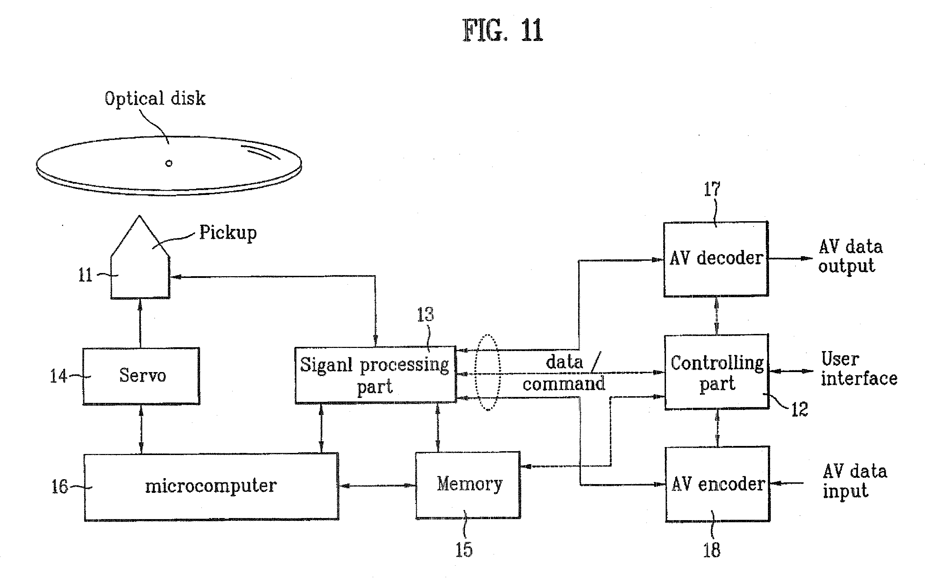

FIG. 11 illustrates a block diagram of an optical recording and reproduction apparatus, having technical aspects of the present invention realized therein according to the foregoing embodiments. As shown, the optical recording and reproduction apparatus includes a pickup 11 for reading main data, supplemental data, and reproduction management information, a servo 14 for controlling operation of the pickup 11, a signal processing part 13 for restoring a reproduction signal from the pickup 11 to a desired signal value, or modulating a signal to be written into a signal writable on the optical disc, a memory 15 for pre-loading reproduction management information inclusive of the supplemental data, and a microcomputer 16 for controlling the above operations.

The memory 15 represents a collection of possible various storage elements (RAMs, buffers, and the like) that may be in the optical recording and reproducing apparatus. It is apparent that a plurality of storage means having different names may be substituted for the memory 15.

An AV decoder 17 decodes output data and provides the decoded data to the user under the control of the control part 12 (e.g., a processor). An AV encoder 18 converts an input signal into a signal of a particular format, for an example, the MPEG2 transport stream, and provides to the signal processing part 13 under the control of the control part 12. For example, the control part 12 together with the AV encoder 18 and the signal processing part 13 may record any of the data structures discussed above.

Upon receipt of a user's order to reproduce a particular title, the control part 12, a block for controlling operation of the entire optical recording and reproducing apparatus, reads a playitem PlayItem and subplayitem information of a playlist from the PlayList directory, and reproduces as discussed above the playitem PlayItem and the subplayitem SubPlayItem according to, for example, clip type information of the supplemental data, application and timing information of the main data and the supplemental data included in the read information.

### Industrial Applicability

While the invention has been disclosed with respect to a limited number of embodiments, those skilled in the art, having the benefit of this disclosure, will appreciate numerous modifications and variations there from. For example, while described with respect to a Blu-ray ROM optical disk in several instances, the present invention is not limited to this standard of optical disk or to optical disks. It is intended that all such modifications and variations fall within the spirit and scope of the invention.

## Claims

1. A recording medium having a data structure for managing main data and supplemental data, comprising a recording area storing a playlist
**characterized in that**
the playlist including at least one playitem included in a mainpath and at least one subplayitem included in a subpath, the playitem including management information for managing reproduction of main data recorded on the recording medium, the subplayitem including management information for managing reproduction of supplemental data recorded on the recording medium, one of the at least one subplayitem identifying a plurality of clip information files for a same playing interval of the subplayitem, each clip information file including attributes of an associated clip of the supplemental data, each of the plurality of clip information files includes an application type indicator indicating a type of application using the associated clip of the supplemental data, and the playlist including a type indicator that indicates a type of the subpath, and the type of the subpath is associated with the type of application.

2. The recording medium of claim 1, wherein when the type indicator indicates the type of the subpath is a text subtitle, the type of application using the associated clip of the supplemental data is for text subtitle.

3. The recording medium of claim 1, wherein the clip information files named by the subplayitem indicate clips of different language text subtitles.

4. The recording medium of claim 1, wherein the type indicator indicates that the type of the subpath is one of audio for a slide show, an interactive graphic presentation menu, and a text subtitle presentation.

5. A method of reproducing a data structure for managing main data and supplemental data from a recording medium, comprising
reproducing a playlist from the recording medium
**characterized in that** the playlist including at least one playitem included in a mainpath and at least one subplayitem included in a subpath, the playitem including management information for managing reproduction of main data recorded on the recording medium, the subplayitem including management information for managing reproduction of supplemental data recorded on the recording medium, one of the at least one subplayitem identifying a plurality of clip information files for a same playing interval of the subplayitem, each clip information file including attributes of an associated clip of the supplemental data, each of the plurality of clip information files includes an application type indicator indicating a type of application using the associated clip of the supplemental data, and the playlist including a type indicator that indicates a type of the subpath, and the type of the subpath is associated with the type of application.

6. A method of recording a data structure for managing main data and supplemental data on a recording medium, comprising:
recording a playlist on the recording medium
**characterized in that** the playlist including at least one playitem included in a mainpath and at least one subplayitem included in a subpath, the playitem including management information for managing reproduction of main data recorded on the recording medium, the subplayitem including management information for managing reproduction of supplemental data recorded on the recording medium, one of the at least one subplayitem identifying a plurality of clip information files for a same playing interval of the subplayitem, each clip information file including attributes of an associated clip of the supplemental data, each of the plurality of clip information files includes an application type indicator indicating a type of application using the associated clip of the supplemental data, and the playlist including a type indicator that indicates a type of the subpath, and the type of the subpath is associated with the type of application.

7. The method of claim 5 or 6, wherein when the type indicator indicates the type of the subpath is a text subtitle, the type of application using the associated clip of the supplemental data is for text subtitle.

8. The method of claim 5 or 6, wherein the type indicator indicates that the supplemental data type is one of audio for a slide show, an interactive graphic presentation menu, and a text subtitle presentation.

9. An apparatus for reproducing a data structure for managing main data and supplemental data from a recording medium, comprising:
a pickup (11) to reproduce data recorded on the recording medium
**characterized in that** the apparatus comprising
a controller(16) configured to control the pickup (11) to reproduce a playlist from the recording medium, the playlist including at least one playitem included in a mainpath and at least one subplayitem included in a subpath, the playitem including management information for managing reproduction of main data recorded on the recording medium, the subplayitem including management information for managing reproduction of supplemental data recorded on the recording medium, one of the at least one subplayitem identifying a plurality of clip information files for a same playing interval of the subplayitem, each clip information file including attributes of an associated clip of the supplemental data, each of the plurality of clip information files includes an application type indicator indicating a type of application using the associated clip of the supplemental data, and the playlist including a type indicator that indicates a type of the subpath, and the type of the subpath is associated with the type of application.

10. An apparatus for recording a data structure for managing main data and supplemental data on a recording medium, comprising:
a pickup (11) to record data on the recording medium;
a controller (16) for controlling the pickup (11) to record a playlist on the recording medium, the playlist including at least one playitem included in a mainpath and at least one subplayitem included in a subpath, the playitem including management information for managing reproduction of main data recorded on the recording medium, the subplayitem including management information for managing reproduction of supplemental data recorded on the recording medium, one of the at least one subplayitem identifying a plurality of clip information files for a same playing interval of the subplayitem, each clip information file including attributes of an associated clip of the supplemental data, each of the plurality of clip information files includes an application type indicator indicating a type of application using the associated clip of the supplemental data, and the playlist including a type indicator that indicates a type of the subpath, and the type of the subpath is associated with the type of application.

11. The apparatus of claim 9 or 10, wherein when the type indicator indicates the type of the subpath is a text subtitle, the type of application using the associated clip of the supplemental data is for text subtitle.

12. The apparatus of claim 9 or 10, wherein the type indicator indicates that the supplemental data type is one of audio for a slide show, an interactive graphic presentation menu, and a text subtitle presentation.
